# DEMANDE DE BREVET EUROPEEN

(11) **EP 3 917 108 A1**
(43) Date de publication de la demande: **01.12.2021**
(21) Numéro de dépôt: 21175220.9
(22) Date de dépôt: 21.05.2021
(51) Int. Cl.: H04L 29/06, G06F 21/55

(54) **PROCEDE DE CONFIGURATION D'UN EQUIPEMENT PARE-FEU DANS UN RESEAU DE COMMUNICATION, PROCEDE DE MISE A JOUR D'UNE CONFIGURATION D'UN EQUIPEMENT PARE-FEU, DISPOSITIF, EQUIPEMENT D'ACCES, EQUIPEMENT PARE-FEU ET PROGRAMMES D'ORDINATEUR CORRESPONDANTS**

(30) Priorité: 25.05.2020 FR 2005505
(71) Demandeur: ORANGE, 92130 Issy-les-Moulineaux (FR)
(72) Inventeur: LE GUILLOU, Xavier, 92326 CHÂTILLON CEDEX (FR); BRICHETEAU, Dimitri, 92326 CHÂTILLON CEDEX (FR)

(57) **Abrégé**

L'invention concerne un procédé de configuration d'un équipement pare-feu dans un premier réseau de communication géré par un équipement d'accès à un deuxième réseau de communication.

Un tel procédé met en œuvre:
- l'obtention (21) d'informations caractéristiques de l'équipement utilisateur dans ledit premier réseau par analyse de ses interfaces actives dans ledit réseau ;
- la génération (23) de règles de configuration de l'équipement pare-feu en fonction des caractéristiques obtenues et d'un modèle de configuration prédéterminé ; et
- la transmission (25) à l'équipement pare-feu d'un message de commande de mise à jour d'une configuration, comprenant les règles de configuration déterminées.

## Description

### Domaine technique de l'invention

Le domaine de l'invention est celui de la sécurité d'un réseau de communication, plus précisément de la configuration d'un équipement pare-feu dans un tel réseau.

En particulier, l'invention s'applique à un réseau de communication local, par exemple sans fil, géré par un équipement d'accès à un réseau de communication étendu, par exemple Internet.

### Art antérieur

Un équipement pare-feu est un élément important de la sécurité d'un réseau informatique, car il permet d'appliquer une politique d'accès aux ressources de ce réseau. Il a pour principale tâche de contrôler le trafic de données entre le réseau qu'il protège et d'autres réseaux, en filtrant les flux de données qui transitent par lui. Généralement, il est placé dans un réseau de communication local, domestique ou professionnel en coupure du trafic du données avec un réseau étendu tel que le réseau Internet.

Le pare-feu réalise un filtrage des paquets de données selon divers critères. Les plus courants sont :
- l'origine ou la destination des paquets (adresse IP, port TCP ou UDP, interface réseau, etc.) ;
- les options contenues dans les données (fragmentation, validité, etc.) ;
- les données elles-mêmes (taille, correspondance à un motif, etc.).

Un pare-feu fait souvent office de routeur et permet ainsi de former dans le réseau qu'il protège, plusieurs zones de sécurité appelées zones démilitarisées ou DMZ. Ces zones sont séparées suivant le niveau de confiance que leur porte l'administrateur du réseau.

Il existe plusieurs types de pare-feu, par exemple des pare-feux sans état qui ne prennent pas en compte l'état de la communication entre l'équipement source et l'équipement client destination du trafic de données qu'il traite et des pare-feux à états qui au contraire appliquent des règles de filtrage qui dépendent d'un état de cette communication, laquelle est par exemple basée sur un protocole de communication en mode connecté de type TCP (pour « Transmission Control Protocol », en anglais).

Quel que soit le type de pare-feu, sa configuration est une tâche délicate, mais néanmoins stratégique. En effet, sans pare-feu, un équipement hôte est extrêmement vulnérable à toutes sortes d'attaques via le réseau auquel il est connecté. Il peut même subir une attaque dès les premières secondes après sa connexion au réseau Internet. Une bonne protection des équipements hôtes connectés à un réseau local d'un équipement d'accès à Internet est donc primordiale.

Néanmoins, il est important de définir des règles de configuration adaptées, c'est-à-dire ni trop strictes, ni trop laxistes. Avec des règles de pare-feu trop strictes, l'équipement client résiste mieux aux attaques, mais cette résistance est obtenue au détriment du ou des services déployés par cet équipement client, dont le fonctionnement peut être dégradé par ces règles.

Cette problématique de configuration se pose tout particulièrement pour les pare-feux embarqués dans des passerelles résidentielles configurées pour à la fois gérer un réseau de communication local et router du trafic de données avec un réseau de communication étendu de type Internet. Sa configuration du pare-feu d'une passerelle Internet est réalisée manuellement, mais elle nécessite de connaître toutes les caractéristiques des équipements hôtes qui se connectent à son réseau local. Or, un utilisateur administrateur de ce réseau n'a pas forcément un niveau de connaissances informatiques suffisant pour obtenir de telles caractéristiques ni choisir les règles de configuration appropriées.

Il existe aussi quelques modes de configuration prédéfinis, mais ils ne permettent qu'une configuration du pare-feu qui est globale à tous les services déployés par l'équipement hôte. Par exemple, de tels modes de configuration prédéfinis comprennent :
- un mode « désactivé », selon lequel le pare-feu est inactif ;
- un mode « moyen », selon lequel le pare-feu bloque tout le trafic de données entrant et autorise tout le trafic de données sortant ; et
- un mode « fort », selon lequel le pare-feu bloque tout le trafic de données entrant et tout le trafic de données sortant.

Cette configuration globale et figée ne permet pas de s'adapter aux spécificités d'un équipement hôte particulier qui se connecte au réseau de communication local.

Il existe donc un besoin d'une solution pour faciliter une configuration personnalisée d'un pare-feu dans un réseau de communication local.

L'invention vient améliorer la situation.

### Présentation de l'invention

L'invention répond à ce besoin à l'aide d'un procédé de configuration d'un équipement pare-feu dans un premier réseau de communication géré par un équipement d'accès à un deuxième réseau de communication, caractérisé en ce qu'il met en œuvre :
- l'obtention d'informations caractéristiques de l'équipement utilisateur dans ledit premier réseau par analyse de ses interfaces actives dans ledit réseau ;
- la génération d'au moins une règle de configuration de l'équipement pare-feu en fonction des caractéristiques obtenues et d'un modèle de configuration prédéterminé ; et
- la transmission à l'équipement pare-feu d'un message de commande (CC) de mise à jour d'une configuration, comprenant ladite au moins une règle de configuration générée.

L'invention propose une approche tout-à-fait nouvelle et invention de la configuration d'un équipement pare-feu dans un premier réseau, tel qu'un réseau domestique ou un réseau privé d'entreprise, qui s'appuie sur l'observation de caractéristiques d'un équipement utilisateur connecté au premier réseau pour générer automatiquement des règles de configuration de l'équipement pare-feu, adaptées à la configuration matérielle et logicielle de cet équipement utilisateur et à son comportement dans le premier réseau. Contrairement à l'art antérieur qui ne permet qu'une configuration complètement manuelle, hors de portée d'un novice en informatique ou, à l'opposé, quelques modes de configuration prédéfinis, l'invention adapte automatiquement à jour la configuration du pare-feu à l'équipement utilisateur connecté au premier réseau et prend en compte son comportement dans ce premier réseau. Le fait que ces règles de configuration soient conformes à un modèle ou politique de sécurité prédéterminé garantit un niveau de sécurité accru pour les équipements utilisateurs connectés au premier réseau et accédant au deuxième réseau par l'intermédiaire de l'équipement d'accès.

Selon un aspect de l'invention, l'obtention d'informations caractéristiques est déclenchée sur détection d'une arrivée de l'équipement utilisateur dans le premier réseau.

Un avantage est l'automatisation de la configuration du pare-feu pour un nouvel équipement utilisateur.

Selon un autre aspect de l'invention, l'obtention d'informations caractéristiques d'un équipement utilisateur connecté audit premier réseau, dites informations caractéristiques courantes, est déclenchée régulièrement.

Un avantage est la surveillance continue du premier réseau ce qui permet l'adaptation de la configuration du pare-feu à toute évolution de comportement de l'équipement utilisateur.

Selon encore un autre aspect de l'invention, les informations caractéristiques d'au moins une interface active de cet équipement utilisateur dans le premier réseau de communication comprennent au moins une information représentative d'un logiciel serveur, dit service, exécuté par ledit équipement utilisateur sur ladite interface active et d'un port ouvert par ledit service et la règle de configuration générée définit le réseau parmi le premier réseau et le deuxième réseau, sur lequel le service est rendu accessible.

Un avantage est de réaliser une configuration sur mesure pour chaque service mis en œuvre par l'équipement utilisateur.

Selon encore un autre aspect de l'invention, lesdites informations caractéristiques obtenues comprennent en outre au moins une adresse réseau ayant accédé audit service et les règles de configuration générées comprennent une règle de filtrage d'adresses réseau déterminée en fonction du modèle de configuration prédéterminé et de ladite adresse réseau.

Un avantage est de prendre en compte le trafic de données effectif en provenance et/ou à destination de l'équipement utilisateur, en plus du modèle, pour définir des règles plus adaptées. Selon encore un autre aspect de l'invention, le procédé met en œuvre la validation préalable des règles de configuration générées auprès d'un administrateur du premier réseau de communication, avant leur transmission à l'équipement pare-feu.

Un avantage est de laisser à l'administrateur l'opportunité d'ajuster ou de corriger certaines règles en fonction de ses desiderata.

Avantageusement, la validation met en œuvre la transmission d'une demande de validation et la réception d'une réponse de validation par l'intermédiaire d'une interface homme-machine d'un équipement utilisateur dudit administrateur connecté audit premier réseau de communication.

Par exemple, la demande de validation formule des questions fermées en langage naturel à l'administrateur et les réponses reçues permettent de valider ou d'invalider chacune des règles de configuration générées.

Selon encore un autre aspect de l'invention, le procédé met en œuvre un stockage en mémoire des informations caractéristiques obtenues pour l'équipement utilisateur, en tant qu'informations caractéristiques de référence.

Un avantage est de permettre de garder une trace de l'état de l'équipement utilisateur à son arrivée dans le réseau et ainsi d'être en mesure de détecter un changement de comportement de l'équipement, suite à une nouvelle collecte d'informations caractéristiques.

Selon un autre aspect de l'invention, le procédé met en œuvre une comparaison des informations caractéristiques courantes avec les informations caractéristiques de référence, et la génération de règles de configuration est déclenchée sur détection d'une différence entre les informations caractéristiques courantes et les informations caractéristiques de référence.

Un avantage est de mettre à jour les règles de configuration seulement quand c'est nécessaire. Selon encore un autre aspect de l'invention, lorsque la différence concerne des informations caractéristiques représentatives d'une activation d'une nouvelle interface, au moins une règle de configuration supplémentaire relative à ladite nouvelle interface active est générée et le message de commande de mise à jour comprend ladite au moins une règle supplémentaire au strict nécessaire. Un avantage est de limiter l'étendue des changements de configuration du pare-feu.

Selon encore un autre aspect, lorsque la différence concerne des informations caractéristiques représentatives d'une désactivation d'une interface, le message de commande de mise à jour comprend une commande de suppression de la au moins une règle de configuration relative à l'interface désactivée.

Un avantage est de ne pas encombrer la mémoire du pare-feu avec des règles de configuration devenues caduques.

L'invention concerne également un produit programme d'ordinateur comprenant des instructions de code de programme pour la mise en œuvre d'un procédé de configuration d'un équipement pare-feu selon l'invention, tel que décrit précédemment, lorsqu'il est exécuté par un processeur.

L'invention vise également un support d'enregistrement lisible par un ordinateur sur lequel sont enregistrés les programmes d'ordinateur tels que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargés sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de configuration précité.

L'invention concerne aussi un dispositif de configuration d'un équipement pare-feu dans un réseau de communication local géré par un équipement d'accès à un réseau de communication étendu.

Un tel dispositif est configuré pour :
- obtenir des informations caractéristiques d'un équipement utilisateur connecté au premier réseau par analyse d'interfaces actives de cet équipement utilisateur dans le premier réseau de communication; et
- générer au moins une règle de configuration de l'équipement pare-feu en fonction des caractéristiques obtenues et d'un modèle de configuration prédéterminé ; et
- transmettre à l'équipement pare-feu un message de commande de mise à jour d'une configuration, comprenant ladite au moins une règle de configuration déterminée.

Avantageusement, ledit dispositif est configuré pour mettre en œuvre le procédé de configuration d'un équipement pare-feu, selon ses différents modes de réalisation.

Avantageusement, ledit dispositif est intégré dans un équipement d'accès à un deuxième réseau de communication, configuré pour gérer un premier réseau de communication, ledit premier réseau comprenant un équipement pare-feu. Il s'agit par exemple d'une passerelle domestique ou professionnelle.

L'équipement d'accès, le dispositif de configuration et le programme d'ordinateur correspondants précités présentent au moins les mêmes avantages que ceux conférés par le procédé précité selon les différents modes de réalisation de la présente invention.

Corrélativement, l'invention concerne un procédé de mise à jour d'une configuration d'un équipement pare-feu dans un premier réseau de communication géré par un équipement d'accès à un deuxième réseau de communication.

Selon l'invention un tel procédé met en œuvre :
- la réception d'un message de commande de mise à jour d'une configuration, comprenant des règles de configuration associées à un équipement utilisateur présent dans le premier réseau de communication ; et
- la mise à jour de la configuration de l'équipement pare-feu selon la commande reçue.

Selon l'invention, l'équipement pare-feu est adapté pour prendre en compte les règles de configuration générées par le dispositif de configuration précité et les appliquer.

L'invention concerne également un produit programme d'ordinateur comprenant des instructions de code de programme pour la mise en œuvre d'un procédé de mise à jour d'une configuration d'un équipement pare-feu selon l'invention, tel que décrit précédemment, lorsqu'il est exécuté par un processeur.

L'invention vise également un support d'enregistrement lisible par un ordinateur sur lequel sont enregistrés les programmes d'ordinateur tels que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargés sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de mise à jour d'une configuration précité.

Avantageusement, un tel procédé est mis en œuvre par un équipement pare-feu dans un premier réseau de communication géré par un équipement d'accès à un deuxième réseau de communication. Un tel équipement pare-feu est configuré pour :
- recevoir un message de commande de mise à jour d'une configuration, comprenant au moins une règle de configuration associées à un équipement utilisateur présent dans le premier réseau de communication ; et
- mettre à jour la configuration de l'équipement pare-feu selon les règles de configuration reçues. Avantageusement, l'équipement pare-feu est intégré dans l'équipement d'accès précité.

### Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig 1****]** : présente un exemple d'architecture d'un réseau de communication local géré par un équipement d'accès à un réseau de communication étendu, lorsque cet équipement d'accès comprend un équipement pare-feu et un dispositif de configuration de cet équipement pare-feu selon un mode de réalisation de l'invention ;
**[****Fig 2****]** : décrit sous forme d'un logigramme les étapes d'un procédé de configuration d'un équipement pare-feu dans un réseau de communication local, selon un exemple de réalisation de l'invention ;
**[****Fig 3****]** : présente de façon schématique un exemple d'équipement pare-feu placé en coupure du trafic de données en provenance ou à destination d'un équipement utilisateur connecté au réseau de communication local d'un équipement d'accès à un réseau de communication étendu ;
**[****Fig. 4****]** : décrit sous forme d'un logigramme les étapes d'un procédé de mise à jour d'une configuration d'un équipement pare-feu dans un réseau de communication, selon un exemple de réalisation de l'invention ;
**[****Fig 5****]** : illustre, de façon schématique, les flux de messages échangés entre un dispositif de configuration selon l'invention, un équipement pare-feu et un équipement utilisateur d'un administrateur du réseau local selon un exemple de réalisation de l'invention ;
**[****Fig 6****]** : illustre de façon schématique la structure matérielle d'un dispositif de configuration d'un équipement pare-feu dans un réseau de communication selon un mode de réalisation de l'invention ; et
**[****Fig 7****]** : illustre de façon schématique la structure matérielle d'un dispositif de mise à jour d'une configuration d'un équipement pare-feu dans un réseau de communication selon un mode de réalisation de l'invention.

### Description détaillée de l'invention

Le principe général de l'invention repose l'obtention d'informations caractéristiques d'un équipement utilisateur détecté dans un premier réseau de communication géré par un équipement d'accès à un deuxième réseau de communication et sur la génération automatique de règles de configuration d'un équipement pare-feu de ce réseau, pour protéger cet équipement utilisateur, à partir des informations caractéristiques obtenues. Avantageusement, dans un mode de configuration guidé, une validation des règles de configuration est demandée à un administrateur du réseau avant leur transmission à l'équipement pare-feu.

L'invention permet ainsi d'assister l'administrateur d'un premier réseau de communication géré par un équipement d'accès à un deuxième réseau en réalisant une configuration sur mesure de son équipement pare-feu dès que nécessaire, par exemple lorsqu'un nouvel équipement utilisateur se connecte au réseau ou bien lorsqu'il change de comportement.

L'invention s'applique à tout type de réseau de communication, notamment à un réseau de communication sans fil, géré par un équipement d'accès à un réseau de communication étendu, par exemple internet. Elle s'applique aussi à deux réseaux locaux reliés par un routeur, sans fil ou filaires, tels que par exemple deux sous-réseaux indépendants d'un même réseau d'entreprise.

Un tel équipement d'accès est par exemple une passerelle domestique (pour « home gateway » en anglais) ou une passerelle professionnelle.

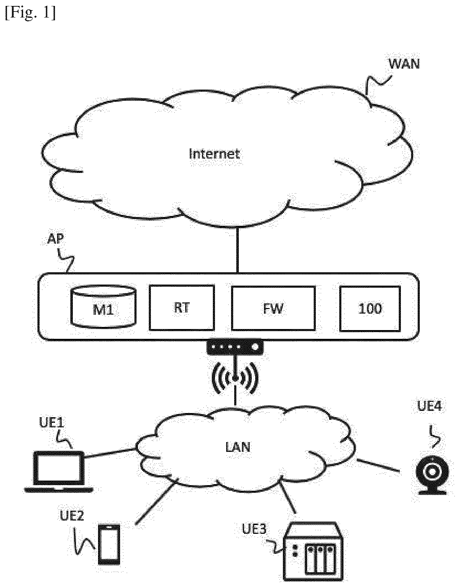

On présente désormais, en relation avec la **figure 1**, un réseau de communication local LAN géré par un équipement d'accès AP à un réseau de communication étendu WAN, tel que par exemple le réseau internet. Le réseau de communication local LAN est par exemple un réseau sans fil, basé sur une technologie telle que Wi-Fi®, Bluetooth®, ZigBee, Z-Wave®, etc.

L'équipement d'accès AP est par exemple une passerelle domestique (pour « home gateway », en anglais) ou une passerelle professionnelle. Un tel équipement d'accès AP embarque donc un module routeur RT configuré pour router des paquets de données du réseau local LAN vers le réseau distant WAN et vice versa.

Le réseau de communication local LAN comprend aussi un équipement ou module pare-feu FW, par exemple de type « netfilter ». Un tel pare-feu s'exécute dans un système d'exploitation Linux et s'appuie sur des tables « iptables » comprenant des règles de filtrage de paquets de données qui transitent par le routeur RT.

Dans cet exemple de réalisation, il est intégré dans l'équipement d'accès AP, mais l'invention s'applique également lorsque le pare-feu FW est un équipement indépendant de l'équipement d'accès AP. Le rôle d'un tel pare-feu est de contrôler l'accès aux ressources du réseau de communication local LAN par des équipements externes au réseau local. En particulier, un tel pare-feu réalise généralement une fonction de redirection de port ou NAT (pour « Network Address Translation », en anglais), qui permet à des équipements utilisateurs d'un réseau de communication local LAN d'accéder au réseau étendu, par exemple Internet, avec l'adresse du routeur. A l'inverse, le pare-feu réalise aussi une fonction de redirection de port (pour « Port forwarding », en anglais) qui permet d'accéder à une machine du réseau LAN depuis le réseau étendu WAN, par exemple lorsqu'elle met en œuvre un service sur un port YY. Pour ce faire, une règle du pare-feu redirige le port XX du routeur vers le port YY de cette machine. Un seul port est redirigé : les autres requêtes destinées à d'autres ports ont comme destination finale le pare-feu de l'équipement d'accès et n'accèdent pas aux équipements utilisateurs du réseau local.

En relation avec la **figure 1**, on considère aussi des équipements utilisateurs UE1-UE4, qu'on désignera aussi par équipements hôtes, configurés pour se connecter au réseau de communication étendu LAN via le réseau de communication local LAN et pour héberger des services destinés à leurs utilisateurs. Il s'agit de n'importe quel équipement d'un utilisateur capable de se connecter à un réseau de communication, comme par exemple un ordinateur portable UE1 (« labtop », en anglais), une tablette (non représentée) ou un téléphone intelligent UE2 (pour « smartphone », en anglais). Il peut s'agir aussi d'un objet communicant faisant partie de l'internet des objets ou loT (pour « Internet of Things », en anglais), tel qu'un serveur UE3 de stockage en réseau NAS (pour « Network Attached Storage », en anglais), un capteur (non représenté), une caméra UE4, etc. De façon générale, on considère ici toute équipement utilisateur susceptible d'accéder au réseau étendu WAN par le réseau de communication local LAN et de mettre en danger la sécurité de ce réseau.

Selon cet exemple de réalisation de l'invention, l'équipement d'accès AP comprend un dispositif 100 de configuration de l'équipement pare-feu FW. Un tel dispositif est configuré pour détecter la présence d'un nouvel équipement utilisateur UE1-UE4 dans le réseau de communication local LAN, obtenir des informations caractéristiques de cet équipement utilisateurs et des services qu'il héberge par analyse de ses interfaces actives dans le réseau, générer une pluralité de règles de configuration de l'équipement pare-feu en fonction des informations caractéristiques obtenues et transmettre la pluralité de règles à l'équipement pare-feu. Les informations caractéristiques obtenues sont avantageusement stockées dans une mémoire M1 de ce dispositif 100, en association avec un identifiant du nouvel équipement utilisateur UE1-U4.

Ainsi, selon l'invention, l'équipement pare-feu n'est plus configuré manuellement ou à partir de quelques modes de configuration prédéfinis, mais il reçoit des règles de configuration spécifiques pour chaque nouvel équipement utilisateur qui s'est connecté au réseau de communication local LAN.

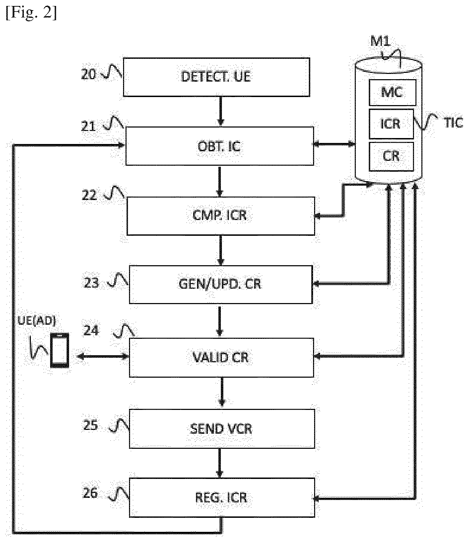

Avantageusement, le dispositif 100 met ainsi un procédé de configuration d'un équipement pare-feu dans un réseau de communication local géré par un équipement d'accès à un réseau de communication étendu selon l'invention qui va maintenant être détaillé en relation avec la **figure 2****.** Dans cet exemple de réalisation de l'invention, un nouvel équipement utilisateur UE est détecté en **20** dans le réseau de communication local LAN. Par exemple, le dispositif 100 reçoit une notification de l'équipement d'accès AP qui a reçu une requête de découverte d'un serveur DHCP diffusée par l'équipement utilisateur UE ou une demande de connexion au réseau local LAN basée sur une adresse IP déjà obtenue par cet équipement utilisateur. En effet, l'équipement d'accès est configuré pour surveiller le trafic de données dans le réseau local LAN. Optionnellement, il peut avoir obtenir des informations directement de la part du serveur DHCP.

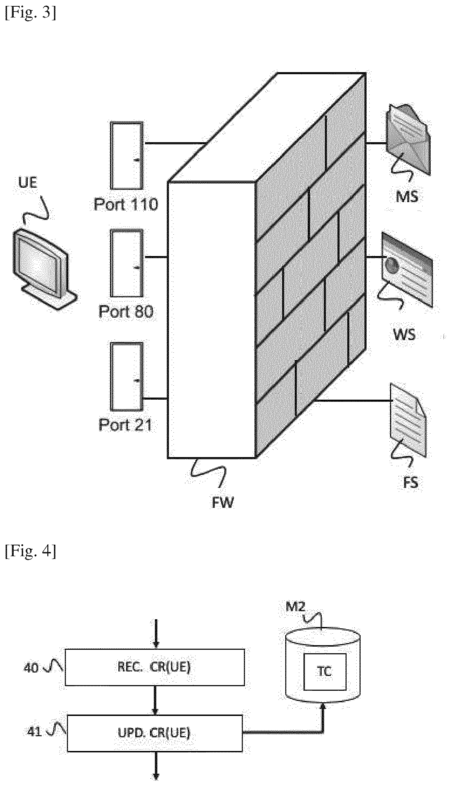

En **21,** le dispositif 100 obtient des informations caractéristiques IC de cet équipement utilisateur par analyse des interfaces actives de cet équipement utilisateur dans le réseau local et des flux de données transitant par ces interfaces. On désigne par interfaces actives les interfaces que l'équipement utilisateur active pour se connecter au réseau local et mettre en relation les programmes informatiques qui s'exécutent sur un de ses processeurs avec d'autres programmes informatiques qui s'exécutent sur d'autres machines du réseau local ou du réseau étendu. Une telle interface se caractérise notamment par un type de connexion utilisé comme support de communication, par exemple un lien filaire, sans fil, une technologie sans fil particulière, etc. Elle se distingue aussi par les ports que cet équipement utilisateur a ouverts sur un tel support pour communiquer avec des programmes informatiques ou logiciels distants. En effet, ces logiciels distants, selon les cas, écoutent ou émettent des informations sur ces ports. Un port est distingué par son numéro, qui est codé sur 16 bits. Avec les ports, la machine d'un équipement utilisateur peut exécuter plusieurs logiciels serveurs et même simultanément des logiciels clients et des serveurs. Lorsqu'un logiciel client veut dialoguer avec un logiciel serveur, aussi appelé service, il a donc besoin de connaître le port écouté par ce dernier. Les ports utilisés par les services devant être connus par les clients, les principaux types de services utilisent des ports qui sont dits réservés. Par exemple, comme illustré par la **figure 3**, lorsqu'un équipement utilisateur UE veut récupérer son courrier électronique sur un serveur de messagerie MS distant de type POP, son logiciel client de messagerie écoute le port 110, alors que pour consulter un serveur web WS de type HTTP par le biais d'un navigateur web, son navigateur client web utilise le port 80. Enfin, il se connecte à un serveur FS de partage de fichiers distant, par exemple de type FTP (pour « File Transfer Protocol », en anglais) à l'aide du port 21.

Avantageusement, l'analyse des interfaces actives de l'équipement utilisateur par le dispositif 100 s'appuie sur des modules disponibles au niveau de l'équipement d'accès AP. En effet ce dernier bénéficie d'une visibilité sur le trafic de données échangé dans le réseau local ainsi que sur celui routé vers ou depuis le réseau de communication étendu et il est nativement configuré pour collecter des informations sur ce trafic de données.

En particulier, l'équipement d'accès collecte des informations représentatives d'événements réseau datés, survenus au niveau de ses modules logiciels ou matériels, tels que le module pare-feu FW par exemple, un serveur d'attribution d'adresses IP par exemple de type DHCP (pour « Dynamic Host Configuration Protocol », en anglais) ou encore un module DNS (pour « Domain Name System », en anglais) d'association d'un nom de domaine à une adresse IP pour faciliter l'accès aux équipements hôtes sur un réseau IP.

Plus généralement, on désigne ici par événement réseau tout événement daté qui a donné lieu à l'enregistrement par un logiciel ou un système d'exploitation d'un équipement connecté au réseau, d'une ligne dans un journal d'événements, dit moteur de logs. Il s'agit par exemple d'un accès au système, d'une modification d'un fichier, d'une demande d'ouverture de port, d'un trafic de paquets destiné à une adresse IP cible et un port cible, d'une quantité d'informations envoyées etc. L'équipement d'accès est configuré pour lire les enregistrements des journaux d'événements de ses modules matériels et logiciels, comme par exemple l'enregistrement suivant, issu d'un journal du module pare-feu FW:
*2019 Aug 4 13:23:00 centos kernel: IPTables-Dropped: IN=em1 OUT= MAC=o2:be:d2:ob:11:of.-e2.-f2:00:00 SRC=193.252.19.3 DST=80.11.95.103 LEN=52 TOS=0x00 PPEC=0x00 TTL=127 ID=9434 DF PROTO=TCP SPT=58428 DPT=443 WINDOW=8192 RES=0x00 SYN URGP=0.*

Il est aussi configuré pour lire et analyser des enregistrements de journaux d'événements alimentés par des modules matériels ou logiciels du nouvel équipement utilisateur et stockés sur l'équipement d'accès AP par l'intermédiaire d'un système de centralisation de type syslog par exemple. Un enregistrement issu du journal du logiciel client Web de l'équipement utilisateur peut prendre la forme suivante :
*193.252.19.3* - *peter [9*/*Feb*/*2019:10:34:12 -0700] "GET*/*sample-image.png HTTP*/*2" 2001479.*

Avantageusement, l'équipement d'accès AP est également équipé de sondes, tels que des analyseurs de paquets de données de type « tcpdump » par exemple, qui interceptent (pour « sniff », en anglais) des flux de données échangées entre l'équipement utilisateur UE et l'équipement d'accès AP.

Selon cet exemple de réalisation de l'invention, les informations caractéristiques IC sont extraites voire déduites des enregistrements collectés. Elles comprennent avantageusement une information caractéristique d'un type d'équipement utilisateur. Il s'agit par exemple :
- d'un nom réseau déclaré par le terminal, par exemple auprès du serveur DHCP ou dans une requête de connexion IP, tel que « HP-DeskjetXXXX » pour une imprimante ou « iPhone de YYYY » pour un terminal mobile ;
- d'un identifiant de l'équipement utilisateur, par exemple de type OUI (pour « Organizationally Unique Identifier », en anglais) qui est un nombre de 24 bits assigné par l'IEEE. Ce numéro identifie un fabricant ou une organisation de façon unique dans une adresse liaison de type MAC. Il s'agit généralement des3 premiers octets de l'adresse MAC. Par exemple l'OUI « C8:9C:1D » désigne un équipement professionnel de la marque CISCO®, « D4:22:21 » se rapporte à un équipement domotique de la marque Sercomm®, « 00:E0:4C », un ordinateur personnel grand public de la marque Realtek® et « 00:14:7C » un ordinateur professionnel de la marque 3COM®.

Ainsi, il détermine, à partir des informations caractéristiques relatives à un type de cet équipement utilisateur telles que par exemple le nom de l'équipement utilisateur et son OUI, s'il s'agit d'un équipement professionnel ou grand public.

Avantageusement, les informations caractéristiques concernent aussi :
- une ou plusieurs interfaces de connexion de l'équipement utilisateur au réseau de communication local, par exemple filaire et/ou sans fil, de type Wifi ou Bluetooth ou ZigBee ou autre ;
- un ou plusieurs logiciels clients ou serveurs qui s'exécutent sur un processeur de l'équipement utilisateur connecté au réseau local ;
- un ou plusieurs ports ouverts sur le réseau local et/ou sur le réseau étendu, par ce ou ces logiciels. Il s'agit en général de ports réservés et bien connus. Par exemple un logiciel client d'un serveur web WS distant ouvre le port 80 (http) et/ou le port 443(https) , un logiciel client d'un serveur de messagerie électronique MS distant le port 110, un logiciel client d'un serveur de partage de fichiers FS de type FTP le port 21, un protocole de type client-serveur Telnet s'appuyant sur TCP le port 23 et un service de communication de type SSH (pour « Secure Shell », en anglais) le port 22. Avantageusement, l'équipement d'accès AP collecte des enregistrements relatifs au trafic de données dans le réseau local sur une période temporelle prédéterminée, par exemple de quelques minutes, pour apprendre sur la façon dont l'association (pour « binding », en anglais) entre ces services et des ports de l'équipement utilisateur a été faite. En particulier, les informations caractéristiques obtenues précisent si le port est ouvert :
- sur le réseau local ou sur le réseau étendu ;
- dans le sens entrant et/ou sortant.

Avantageusement, le dispositif 100 obtient aussi, à partir de cette collecte d'enregistrements relatifs au trafic de données des adresses IP externes au réseau local autorisées à communiquer avec le service en question et détermine si cette communication se fait dans le sens entrant et/ou sortant. Pour les logiciels serveurs, il vérifie enfin si la mise en œuvre de ces services est cohérente avec le type d'équipement utilisateur détecté (grand public/professionnel). Avantageusement, il évalue un niveau de risque en fonction du service. Par exemple, un service tel que Telnet qui permet la prise de contrôle à distance sur un équipement utilisateur, associé au port 23, est considéré comme risqué, alors que le service SSH associé au port 22 est plus sécurisé.

L'ensemble des informations caractéristiques IC forme une empreinte qui représente ou signe le comportement de cet équipement client dans le réseau LAN, au moment où il se connecte.

En **23**, le dispositif 100 exploite les informations obtenues pour générer des règles de configuration du pare-feu FW adaptées aux caractéristiques du nouvel équipement utilisateur UE. Il applique un modèle de configuration MC prédéfini.

Selon une première option, cette génération est automatique.

Par exemple, pour qu'un logiciel client web accède au serveur Web distant, le dispositif 100 génère une règle de configuration du pare-feu qui redirige le port 80 (http) de l'équipement d'accès vers le port 80 de ce serveur. Elle s'écrit par exemple de la façon suivante :
*iptables -t nat -A PREROUTING -p tcp --dport 80 -j DNAT --to-destination 123.123.123.123:80.*

Avantageusement, les informations caractéristiques obtenues par analyse du trafic pendant une période temporelle prédéterminée sont exploitées comme suit, pour générer des règles de configuration du pare-feu :
- un port non utilisé pendant la période temporelle prédéterminée est dé-publié, par suppression de la règle de configuration du pare-feu correspondante ;
- les adresses sources autorisées à accéder à un port de l'équipement d'accès AP, sont spécifiées explicitement et en nombre limité. Par exemple, la règle suivante n'autorise que l'adresse IP 12.12.12.12 à accéder au port 80 extérieur de l'équipement d'accès AP :
   iptables -A INPUT -p tcp -s 12.12.12.12 --dport 80 -j ACCEPT;
- les adresses destination autorisées depuis un port de l'équipement d'accès AP sont spécifiées de façon analogue.

Optionnellement, en **24,** le dispositif 100 réalise une validation préalable des règles de configuration CR qu'il a générées auprès d'un administrateur AD du réseau local LAN et de l'équipement d'accès AP. Par exemple, ce dernier est connecté au réseau LAN sur son équipement utilisateur UE(AD), par exemple l'ordinateur portable UE1. Un message de demande de validation DV lui est adressé en **24₁**. Il comprend au moins un identifiant de l'équipement utilisateur UE et des informations représentatives de la pluralité de règles de configuration CR. Avantageusement, ces informations comprennent des questions qui traduisent en langage naturel chacune des règles de configuration générées. Plus précisément, il s'agit de questions fermées pour lesquelles la réponse attendue est oui ou non. Avantageusement, un tel message est traité par une interface de programme applicative ou API (pour « Application Programmation Interface », en anglais) installée sur l'équipement utilisateur UE1 de l'administrateur et configurée pour recevoir le message de demande de validation, extraire les questions qu'il contient, les présenter à l'administrateur en les affichant sur l'écran de l'équipement utilisateur UE1, récupérer les réponses saisies par l'administrateur AD sur le clavier de son équipement utilisateur UE(AD), les insérer dans un message de réponse RV et le transmettre au dispositif 100.

En **24₂**, le dispositif 100 extrait les réponses reçues dans le message RV et adapte la pluralité de règles de configuration en conséquence. Il obtient une pluralité de règles de configuration validées VCR.

En **25,** il transmet à l'équipement pare-feu un message de commande de configuration CC comprenant la pluralité de règles validées VCR que ce dernier mette à jour sa table de configuration en y incluant ces règles de configuration.

En **26,** le dispositif 100 stocke en mémoire M1 les informations caractéristiques IC obtenues en 21, en tant qu'informations caractéristiques de référence ICR(UE) pour l'équipement utilisateur UE. Selon cet exemple de réalisation de l'invention, les informations caractéristiques IC obtenues ont différents types. Par exemple, le nom du service, sa version, le port ouvert pour ce service et enfin les adresses IP autorisées à communiquer avec ce service se rapportent à un type « service », tandis que le nom déclaré de l'équipement utilisateur UE, et son identifiant OUI concernent un type « identité déclarative ». L'ensemble des informations caractéristiques peut ainsi être représenté par un modèle structuré de données. Avantageusement, un service particulier est décrit par une instanciation d'une propriété de type service de ce modèle de données dont les champs ou attributs comprennent le nom du service, le ou les ports ouverts et optionnellement, la version du logiciel et la ou les adresses IP autorisées à communiquer avec ce service. Quant aux informations d'identité déclarative, elles sont décrites par une instanciation de la propriété de type « identité ». Par exemple, un tel modèle est décrit conformément au langage XML (pour « Extensible Markup Language », en anglais). Les informations caractéristiques de référence ICR du nouvel équipement utilisateur UE sont par exemple stockées dans un fichier ICR(UE) qui est organisé selon ce modèle de données.

De façon alternative, les informations caractéristiques sont stockées, sous forme structurée ou non, dans une entrée d'une table TIC, ladite entrée étant indexée à l'aide d'une information identifiant l'équipement utilisateur comme par exemple son adresse MAC ou bien son adresse IP.

On décrit maintenant quelques exemples concrets de configuration d'un nouvel équipement utilisateur UE en mode guidé.

### Exemple 1 : détection d'un ordinateur (UE1) en mode serveur

En **21,** les informations caractéristiques suivantes sont obtenues :
- un nom de réseau : « r-Inx-goldorak » ;
- un identifiant de l'équipement utilisateur, de type OUI : « 00:14:7C » . L'équipement utilisateur est un ordinateur personnel, fixe ou un équipement serveur, dont la carte réseau est de marque 3COM ;
- une interface filaire;
- une multitude de ports standards ou réservés sont ouverts.

Elles sont caractéristiques d'un équipement serveur.

Un audit des ports ouverts par cet équipement utilisateur a permis d'obtenir les informations complémentaires suivantes :
- les ports suivants sont ouverts : 20 / 21 / 22 / 23 / 25 / 53 / 80 / 110 / 123 / 145 / 443 / 873 / 993 / 995.

En **23,** l'exploitation de ces informations permet au dispositif 100 d'établir que l'équipement utilisateur est un serveur et qu'il a ouverts de nombreux services.

En **24,** selon un mode de configuration guidé, les questions suivantes sont adressées à l'administrateur AD du réseau local LAN :
- *Un nouvel équipement utilisateur a été détecté : est-ce bien un serveur ?*

La réponse attendue est « *oui* » ou « non ».
- *Le serveur possède de nombreux services. Souhaitez-vous le placer en zone démilitarisée DMZ ? Ceci implique de déployer un module pare-feu sur le serveur.*

La réponse attendue est « *oui* » ou « non ».
- *Un service de partage de fichiers de type FTP est présent sur les ports 20*/*21, voulez-vous le publier sur Internet ? Ceci implique d'attribuer des mots de passe forts aux utilisateurs. Par ailleurs, ce service est déconseillé, du fait qu'il laisse transiter des données en clair [DECONSEILLE]*

La réponse attendue est « *oui* » ou « non ».
- Un service de communication de type SSH est présent sur le port 22, voulez-vous le publier sur Internet ? Ceci implique d'attribuer des mots de passe forts aux utilisateurs.

La réponse attendue est « *oui* » ou « non ».
- Un service Telnet est présent sur le port 23. Ce service est fortement déconseillé, nous vous conseillons d'opter pour un service SSH. Voulez-vous le publier malgré tout ? [DECONSEILLE]

La réponse attendue est « *oui* » ou « non ».
- Un service SMTP est présent sur le port 25. Publier un tel service requiert une attention particulière afin de ne pas être à l'origine de campagnes d'envois de messages électroniques sans le consentement des destinataires ou spam. Voulez-vous malgré tout le publier ?

La réponse attendue est « *oui* » ou « non ».
etc.

### Exemple 2 : détection d'un serveur (UE3) de stockage en réseau ou NAS

En **21,** les informations caractéristiques suivantes sont obtenues :
- Nom de l'équipement utilisateur : « srv-nas » => disque dur réseau ?
- identifiant OUI : « 00:11:32 ». L'équipement utilisateur est un disque dur de marque Synology Incorporated ;
- Interface filaire, représentative d'un serveur ;
- multitude de ports standards ouverts, représentative d'un serveur ;
- ports ouverts : 20 / 21 / 80 / 139 / 443 / 445.

En **23,** le dispositif 100 en déduit que l'équipement utilisateur est un serveur de stockage en réseau NAS et qu'il a 6 ports ouverts.

En **24,** selon un mode de configuration guidé, les questions suivantes sont adressées à l'administrateur AD du réseau local LAN :
- *Un nouvel équipement utilisateur a été détecté : est-ce bien un disque dur ?*

La réponse attendue est « *oui* » ou « non ».
- *Un service de partage de fichiers de type FTP est présent sur les ports 20*/*21, voulez-vous le publier sur Internet ? Ceci implique d'attribuer des mots de passe forts aux utilisateurs. Par ailleurs, ce service est déconseillé, du fait qu'il laisse transiter des données en clair [DECONSEILLE]* La réponse attendue est « *oui* » ou « non ».
- Un serveur web est présent sur les ports 80 (http) et 443 (HTTPS), voulez-vous le publier sur Internet ? Attention, toutes les informations relatives à vos contenus personnels pourraient être accessibles au monde entier [DECONSEILLE]

La réponse attendue est « *oui* » ou « non ».
- Un service de partage de fichiers Samba a été détecté sur les ports 139 et 445, voulez-vous le publier sur Internet ? Attention, tous vos contenus personnels pourraient être accessibles au monde entier [DECONSEILLE]

La réponse attendue est « *oui* » ou « non ».

Avantageusement, l'analyse du trafic de données a permis de mettre en évidence que certains services n'étaient jamais utilisés, d'où la formulation des questions suivantes :
- le protocole de temps réseau ou NTP (pour « Network Time Protocol », en anglais) qui permet de synchroniser, via un réseau informatique, l'horloge locale d'ordinateurs sur une référence d'heure, ne présente aucune activité. Voulez-vous le maintenir publié ?

S'il a été détecté que seules certaines adresses IP parvenaient à se connecter à certains services, la question suivante peut être posée :
- le service de synchronisation de fichiers à distance rsync (pour « Remote Synchronisation », en anglais) » n'a été utilisé qu'à partir d'adresses de type 193.252.0.0/16 et 2.0.0.0/8. Voulez-vous restreindre les adresses IP autorisées à utiliser ce service ?

Dans le cas où il a été détecté que le module pare-feu FW de l'équipement d'accès bloquait beaucoup de requêtes sur un port particulier, il s'agit de savoir si elles sont réellement destinées à un équipement du réseau LAN ou si elles constituent une attaque contre ce réseau. La question supplémentaire suivante est donc posée :
- *de nombreuses requêtes ont été détectées sur le port 443 (serveur web en mode sécurisé HTTPS) du routeur de votre passerelle domestique. Avez-vous oublié de publier ce service sur Internet ?*

### Exemple 3 : détection d'un téléphone intelligent (UE2)

En **21,** les informations caractéristiques suivantes sont obtenues :
- Nom de l'équipement utilisateur : « pouetpouet ». Il s'agit certainement d'un équipement grand public
- identifiant OUI : « FC:FC:48 ». L'équipement utilisateur est de la marque Apple Inc. Il s'agit d'un iPhone, d'un iPad ou d'un Mac ;
- Interface Wifi ;
- un seul port ouvert pour un service de partage de fichiers de contenus multimédia, de type Airplay.

En **23,** le dispositif 100 en déduit que l'équipement utilisateur est un téléphone mobile qui met en œuvre un service de partage de fichier sur un port.

En **24,** selon un mode de configuration guidé, les questions suivantes sont adressées à l'administrateur AD du réseau local LAN :
- *Un nouvel équipement utilisateur a été détecté : est-ce un ordinateur personnel ?*

La réponse attendue est « *oui* » ou « non ».
- *Est-ce un téléphone mobile de marque Apple ?*

La réponse attendue est « *oui* » ou « non ».
- *Un service de* type Airplay est présent sur les ports 554 / 3689. Il est fortement déconseillé de publier ce type de service sur Internet, afin que vos contenus ne deviennent pas accessibles au monde entier. Souhaitez-vous malgré tout publier le service Airplay sur Internet ? [DECONSEILLE]

La réponse attendue est « *oui* » ou « non ».

### Exemple 4 : détection d'une caméra UE4:

En **21,** les informations caractéristiques suivantes sont obtenues :
- Nom de l'équipement utilisateur : « DSC-5030L».
- identifiant OUI : « FC:75:16». L'équipement utilisateur est de la marque DLINK. Il s'agit d'un équipement grand public;
- Interface : Wifi ;
- quatre ports ouverts 80 (TCP), 5001(TCP et UDP), 5002 (TCP et UDP) et 5003 (TCP et UDP).

En **23,** le dispositif 100 en déduit que l'équipement utilisateur est une caméra qui met en œuvre un service d'administration sur le port 80, un service de streaming audio sur le port 5002 et un service de streaming vidéo sur le port 5003, et un service de synchronisation audio/vidéo sur le port 5001. En **24,** selon un mode de configuration guidé, les questions suivantes sont adressées à l'administrateur AD du réseau local LAN :
- *Un nouvel équipement utilisateur a été détecté : est-ce une caméra ?*

La réponse attendue est « *oui* » ou « non ».
- *Est-ce une caméra de marque DLINK ?*

La réponse attendue est « *oui* » ou « non ».
- *Un service de* type serveur web est présent sur le port 80. Il est fortement déconseillé de publier ce type de service sur Internet, afin que vos contenus ne deviennent pas accessibles au monde entier.

Souhaitez-vous malgré tout publier le service Web sur Internet ? [DECONSEILLE]

La réponse attendue est « *oui* » ou « non ».
- *Un service de type "complex-link" a été identifié sur le port 5001. Ce service n'a pas été formellement reconnu et nous vous déconseillons de le publier sur Internet, à moins de savoir parfaitement ce que vous faites. Souhaitez-vous malgré tout publier ce service sur Internet ?*
*[DECONSEILLE]*

La réponse attendue est « *oui* » ou « non ».
- *Un service de type "rfe" a été identifié sur le port 5002. Ce service n'a pas été formellement reconnu et nous vous déconseillons de le publier sur Internet, à moins de savoir parfaitement ce que vous faites. Souhaitez-vous malgré tout publier ce service sur Internet ? [DECONSEILLE]* La réponse attendue est « *oui* » ou « non ».
- *Un service de type "filemaker" a été identifié sur le port 5003. Ce service n'a pas été formellement reconnu et nous vous déconseillons de le publier sur Internet, à moins de savoir parfaitement ce que vous faites. Souhaitez-vous malgré tout publier ce service sur Internet ? [DECONSEILLE]*

La réponse attendue est « *oui* » ou « non ».

Les exemples qui viennent d'être présentés illustrent une manière parmi d'autres de valider auprès de l'administrateur la pertinence des règles de configuration générées à partir des informations caractéristiques de l'équipement utilisateur UE, collectées par l'équipement d'accès AP.

On considère désormais que l'équipement utilisateur UE est connecté au réseau local LAN.

Selon ce mode de réalisation de l'invention, l'obtention d'informations caractéristiques de l'équipement utilisateur UE est déclenchée périodiquement par le dispositif 100, par exemple toutes les heures. Par exemple, le module d'analyse de ports de l'équipement d'accès émet régulièrement des requêtes_de connexion à destination d'une pluralité de ports de l'équipement utilisateur UE, réservés à des applications logicielles connues (par exemple 80 pour http, 443 pour https). Avec chacun des ports ouverts par l'équipement utilisateur UE, il établit une session de communication par exemple selon le protocole de communication TCP (pour « Transmission Control Protocol », en anglais) et demande à obtenir des informations sur l'application publiée sur ce port (à l'aide d'une requête GET). En plus de l'information selon laquelle le port est ouvert, il obtient généralement en réponse un nom et un numéro de version de l'application en question. Selon un autre mode de réalisation, le dispositif 100 écoute le trafic de données à destination et en provenance de l'équipement utilisateur UE pour repérer des connexions à un port de cet équipement, pour lequel il n'aurait pas encore configuré le pare-feu.

Ce déclenchement régulier de la collecte **21** d'informations caractéristiques IC permet de surveiller l'équipement utilisateur et de détecter des changements dans son comportement.

Pour ce faire, le dispositif 100 compare en **22** les informations caractéristiques courantes ICC avec les informations caractéristiques de référence ICR stockées en mémoire pour cet équipement utilisateur UE, par exemple dans un fichier structuré comme précédemment décrit.

Avantageusement, il vérifie si les mêmes services sont décrits dans les deux fichiers et, en cas de différence constatée, si cette différence correspond au lancement d'un nouveau service ou à la fermeture d'un service présent lors de la dernière collecte d'informations caractéristiques.

Il peut aussi détecter, pour un même service, s'il a évolué en comparant les numéros de version de ce logiciel.

Avantageusement, si une différence est constatée, le dispositif 100 génère de nouvelles règles de configuration en **23,** les soumet éventuellement à la validation de l'administrateur en **24** et transmet en **25** une commande de mise à jour de configuration au pare-feu FW. En **26,** il stocke les informations caractéristiques courantes en mémoire, comme nouvelles informations caractéristiques de référence ICR.

En relation avec la **figure 4****,** on présente un procédé de mise à jour d'une configuration d'un équipement pare-feu dans un réseau de communication local géré par un équipement d'accès selon un mode de réalisation de l'invention. Avantageusement, ce procédé est mis en œuvre par l'équipement pare-feu FW.

En **40,** un message de commande de configuration CC est reçu de l'équipement pare-feu FW en provenance du dispositif 100. Ce message comprend une pluralité de règles de configuration VCR de l'équipement pare-feu FW générées par le dispositif 100 suite à la détection d'une présence d'un nouvel équipement utilisateur dans le réseau de communication local LAN. Avantageusement, lorsque le dispositif 100 et l'équipement pare-feu FW sont tous les deux intégrés dans l'équipement d'accès AP, ils communiquent et s'échangent des données selon un mécanisme de type IPC (pour « Inter Process Communication », en anglais). Bien sûr, l'invention n'est pas limitée à cet exemple, tout autre moyen de communication entre différents composants ou modules d'un même équipement d'accès connu en soi pouvant être mis en œuvre.

En **41,** la pluralité de règles de configuration de l'équipement pare-feu est extraite du message CC et stockée dans une mémoire de l'équipement pare-feu FW. Par exemple, une telle mémoire M2 comprend une table TC de règles de configuration applicables et les règles de configuration extraites sont enregistrées dans cette table TC en association avec un identifiant de l'équipement utilisateur, par exemple son adresse de liaison MAC. Dès lors, elles sont appliquées par l'équipement pare-feu aux interfaces actives du nouvel équipement utilisateur UE.

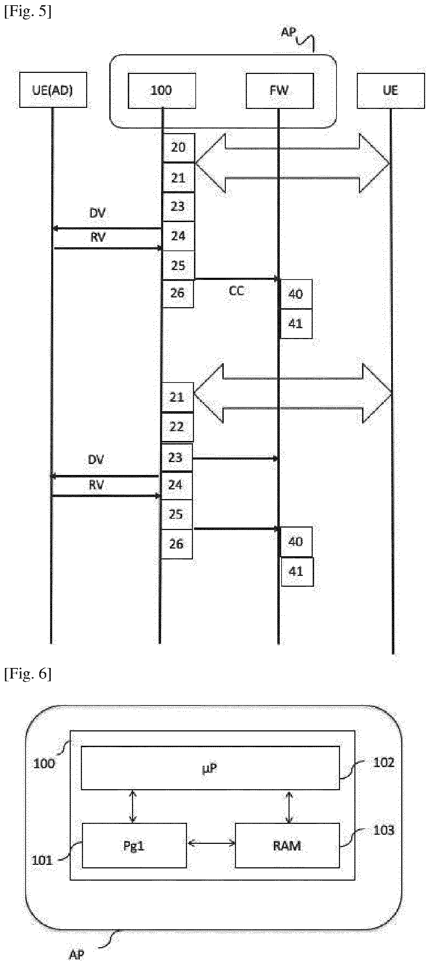

On décrit désormais, en relation avec la **figure 5****,** les flux de messages échangés entre le dispositif 100 de configuration d'un équipement pare-feu FW dans un réseau de communication local géré par un équipement d'accès AP à un réseau de communication étendu WAN, l'équipement pare-feu FW, le nouvel équipement utilisateur UE qui vient de se connecter au réseau local LAN et l'équipement utilisateur UEA de l'administrateur AD du réseau local.

A son arrivée dans le réseau local LAN, l'équipement client UE est détecté par l'équipement d'accès AP qui en informe le dispositif de configuration 100 en **20.** Par exemple, l'équipement d'accès AP comprend un module serveur DHCP (non représenté) et détecte la requête d'attribution d'une adresse IP DHCP-REQUEST reçue par le serveur DHCP de la part de l'équipement utilisateur UE ou bien le module routeur RT détecte une nouvelle entrée dans une table ARP d'association entre l'adresse MAC et l'adresse IP des équipements utilisateurs dans le réseau ou encore une demande de connexion au réseau de la part d'une nouvelle adresse IP.

En **21,** le dispositif 100 obtient des informations caractéristiques IC de ce nouvel équipement utilisateur, par analyse de ses interfaces actives dans le réseau local LAN. Avantageusement, il obtient ces informations de l'équipement d'accès AP qui a accès aux journaux d'événements réseau de ces différents modules et voit le trafic de données en provenance et à destination de l'équipement client. Pour plus de précision, il peut aussi écouter le trafic de données pendant une période temporelle prédéterminée, afin d'obtenir des informations complémentaires sur un usage de ces services, par quelles adresses IP etc.

A partir des informations caractéristiques obtenues, il déduit la nature de l'équipement utilisateur (équipement grand public ou professionnel), sa fonction (serveur, disque dur, téléphone, caméra etc), les logiciels clients et serveurs qu'il met en œuvre et les ports sur lesquels ils sont accessibles. Avantageusement, il applique une politique de configuration pour définir automatiquement en **23** des règles de configuration adaptées au service considéré en fonction de la nature de l'équipement utilisateur, de sa fonction et de l'usage effectif de ce service. Par exemple, en langage naturel, une règle de configuration automatique dictée par la politique de configuration en vigueur pour un service de type « Airplay » sur un équipement utilisateur grand public s'exprimerait comme suit : *« un service de type Airplay est publié sur le réseau local et n'est pas publié sur le réseau Internet. ».* Une pluralité de règles de configuration CR est générée dans un langage et selon un format compréhensible de l'équipement pare-feu FW, par exemple de type iptable.

Dans cet exemple de réalisation, un mode de configuration guidé est mis en œuvre, c'est-à-dire que la pluralité de règles obtenues est soumise à la validation de l'administrateur AD du réseau LAN en **24.** Par exemple, le dispositif 100 traduit les règles de configuration CR en autant de questions exprimées en langage naturel. Elles sont posées successivement à l'administrateur via l'interface d'une API installée sur son équipement utilisateur UE(AD). En fonction des réponses reçues, les règles de configuration sont ajustées et des règles de configuration validées VCR sont obtenues et stockées en mémoire. Elles sont transmises en **25** par le dispositif 100 à l'équipement pare-feu FW dans un message CC de commande de configuration. En **26,** les informations caractéristiques IC sont stockées en mémoire, en tant qu'informations caractéristiques de référence ICR, par exemple dans un fichier structuré selon un modèle de données adapté notamment pour décrire chacun des services s'exécutant sur l'équipement utilisateur UE. Le pare-feu FW reçoit ce message en **40,** extrait les règles de configuration validées et met à jour sa configuration en **41,** par exemple en stockant les règles VCR reçues dans sa table TIC de règles applicables.

A l'issue d'une période temporelle prédéterminée, par exemple d'une heure, le dispositif 100 déclenche de nouveau l'obtention **21** d'informations caractéristiques, dite courantes ICC, pour l'équipement utilisateur UE. Il les compare en **22** aux informations caractéristiques de référence ICR stockées en mémoire. En cas de différence constatée, il met à jour en **23** les règles de configuration du pare-feu. Par exemple, en cas de nouveau service détecté, il ajoute une règle et la transmet en **25** à l'équipement pare-feu FW, éventuellement après validation en **24** auprès d'un administrateur du réseau local LAN. En cas de service fermé, il transmet en **25** à l'équipement pare-feu une commande de suppression de la ou les règles de configuration relatives à ce service. De façon alternative, le dispositif 100 génère de nouvelles règles de configuration à partir des nouvelles informations courantes ICC, les stocke en mémoire en **26,** les fait éventuellement valider en **24** par l'administrateur AD du réseau LAN et les transmet en **25** à l'équipement pare-feu FW pour qu'il remplace les règles actuellement appliquées pour l'équipement utilisateur par ces nouvelles règles. On présente maintenant, en relation avec la **figure 6****,** un exemple de structure matérielle d'un dispositif 100 de configuration d'un équipement pare-feu dans un réseau de communication selon l'invention, comprenant au moins un module de détection d'un équipement utilisateur, un module d'obtention d'informations caractéristiques de cet équipement utilisateur par analyse de ses interfaces actives dans le réseau, un module de génération d'une pluralité de règles de configuration à partir des informations caractéristiques obtenues et d'une politique de configuration prédéterminée et d'un module de transmission d'une commande de configuration à l' équipement utilisateur UE comprenant la pluralité de règles de configuration. Avantageusement, le dispositif 100 comprend en outre un module de validation de la pluralité de règles auprès d'un administrateur AD du réseau local, un module de stockage des informations caractéristiques en mémoire, en tant qu'informations caractéristiques de référence et un module de comparaison des informations caractéristiques obtenues aux informations caractéristiques de référence.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 100 comprend une mémoire vive 103 (par exemple une mémoire RAM), une unité de traitement 102 équipée par exemple d'un processeur, et pilotée par un programme d'ordinateur Pg1, représentatif des modules de détection, d'obtention, de comparaison, de stockage, de génération, de validation et de transmission, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. La mémoire vive 103 peut aussi contenir une table TC comprenant des enregistrements associant à un identifiant de l'équipement utilisateur UE la pluralité de règles de configuration générées et éventuellement validées.

La **figure 6** illustre seulement une manière particulière, parmi plusieurs possibles, de réaliser le dispositif 100 afin qu'il effectue les étapes du procédé de configuration d'un équipement pare-feu dans un réseau de communication local LAN tel que détaillé ci-dessus, en relation avec les figures **2** **et** **5** dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif 100 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 100 intégré dans un équipement d'accès AP à un réseau de communication étendu WAN et configuré pour gérer le réseau de communication local LAN. Il s'agit par exemple d'une passerelle domestique ou professionnelle, d'un réseau de capteurs ou IoT (pour « Internet of Things », en anglais), d'un point d'accès wifi ou même d'un répéteur Wifi.

Selon une variante, le dispositif 100 s'appuie sur la structure matérielle de l'équipement d'accès AP, qui a ici la structure matérielle d'un ordinateur et comprend plus particulièrement un processeur, une mémoire vive, une mémoire morte, une mémoire flash non volatile, un module de routage de données entre le réseau de communication local et le réseau de communication étendu. Avantageusement, l'équipement pare-feu FW est lui-même être intégré dans l'équipement d'accès AP. Par exemple, les moyens de communication entre le dispositif 100 et l'équipement pare-feu FW sont de type inter-processus IPC. La mémoire morte constitue un support d'enregistrement conforme à l'invention, lisible par le processeur et sur lequel est enregistré le programme d'ordinateur Pg1 conforme à l'invention, comportant des instructions pour l'exécution du procédé de configuration d'un équipement pare-feu selon l'invention.

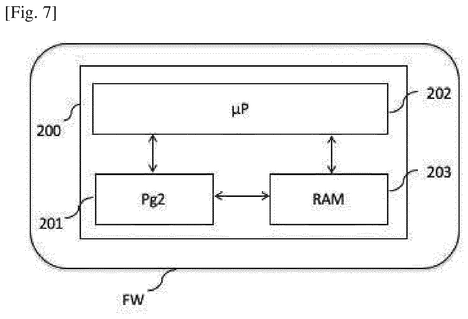

On présente enfin, en relation avec la **figure 7****,** un exemple de structure matérielle d'un équipement pare-feu FW connecté à un réseau de communication local LAN géré par un équipement d'accès AP à un réseau de communication étendu selon l'invention, comprenant au moins un module de réception d'une commande de configuration de la part du dispositif 100 de configuration selon l'invention, comprenant une pluralité de règles de configuration VCR et un module de mise à jour de sa configuration en fonction de la pluralité de règles reçues.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 200 comprend une mémoire vive 203 (par exemple une mémoire RAM), une unité de traitement 202 équipée par exemple d'un processeur, et pilotée par un programme d'ordinateur Pg2, représentatif des modules de réception et de mise à jour, stocké dans une mémoire morte 201 (par exemple une mémoire ROM ou un disque dur). A l'initialisation, les instructions de code du programme d'ordinateur sont par exemple chargées dans la mémoire vive 203 avant d'être exécutées par le processeur de l'unité de traitement 202.

La **figure 7** illustre seulement une manière particulière, parmi plusieurs possibles, de réaliser le dispositif 200 afin qu'il effectue les étapes du procédé de traitement d'une commande de configuration, en relation avec les figures **4** **et** **5** dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le pare-feu FW est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur. Les différents modes de réalisation ont été décrits ci-avant en relation avec un pare-feu FW intégré dans un équipement d'accès AP, mais l'équipement pare-feu FW peut aussi être indépendant de l'équipement d'accès AP.

L'invention qui vient d'être décrite dans ses différents modes de réalisation présente de nombreux avantages. En particulier, elle propose une nouvelle solution de configuration automatique et personnalisée d'un équipement pare-feu dans un premier réseau de communication géré par un équipement d'accès à un deuxième réseau étendu de communication, qui apprend les caractéristiques de ce nouvel équipement utilisateur par analyse de ses interfaces actives et du trafic de données qui transite par elles, puis les exploite pour générer des règles de configuration conformément à une politique ou un modèle de configuration prédéterminé. Ces règles peuvent être soumises à validation d'un administrateur du réseau ou bien directement transmises au pare-feu pour qu'il se mette à jour.

Une fois cette configuration effectuée, l'invention propose en outre une surveillance régulière de l'équipement utilisateur afin de détecter une évolution de son comportement et adapter la configuration du pare-feu en conséquence.

De la sorte, l'administrateur du réseau est assisté dans la configuration de son réseau, ce qui met cette opération à la portée de tout un chacun, quel que soit son niveau de connaissances en informatique, tout en garantissant un niveau de sécurité renforcé et une qualité de service accrue pour les utilisateurs de ce réseau.

## Revendications

1. Procédé de configuration d'un équipement pare-feu dans un premier réseau de communication géré par un équipement d'accès à un deuxième réseau de communication, **caractérisé en ce qu'**il met en œuvre :
- l'obtention (21) d'informations caractéristiques de l'équipement utilisateur dans ledit premier réseau par analyse de ses interfaces actives dans ledit réseau ;
- la génération (23) d'au moins une règle de configuration de l'équipement pare-feu en fonction des caractéristiques obtenues et d'un modèle de configuration prédéterminé ; et
- la transmission (25) à l'équipement pare-feu d'un message de commande (CC) de mise à jour d'une configuration, comprenant ladite au moins une règle de configuration générée.

2. Procédé de configuration d'un équipement pare-feu selon la revendication **1, caractérisé en ce que** l'obtention d'informations caractéristiques est déclenchée sur détection (20) d'une arrivée de l'équipement utilisateur dans le premier réseau.

3. Procédé de configuration d'un équipement pare-feu selon la revendication 1, **caractérisé en ce que** l'obtention d'informations caractéristiques d'un équipement utilisateur connecté audit premier réseau, dites informations caractéristiques courantes, est déclenchée régulièrement.

4. Procédé de configuration d'un équipement pare-feu selon l'une quelconque des revendications **1 à 3 , caractérisé en ce que** les informations caractéristiques d'au moins une interface active de cet équipement utilisateur dans le premier réseau de communication et comprennent au moins une information représentative d'un logiciel serveur, dit service, exécuté par ledit équipement utilisateur sur ladite interface active et d'un port ouvert par ledit service et **en ce que** la règle de configuration générée définit le réseau parmi le premier réseau et le deuxième réseau, sur lequel le service est rendu accessible.

5. Procédé de configuration d'un équipement pare-feu selon la revendication **4, caractérisé en ce que** lesdites informations caractéristiques obtenues comprennent en outre au moins une adresse réseau ayant accédé audit service et **en ce que** les règles de configuration générées comprennent une règle de filtrage d'adresses réseau déterminée en fonction du modèle de configuration prédéterminé et de ladite adresse réseau.

6. Procédé de configuration d'un équipement pare-feu selon l'une des revendications précédentes, **caractérisé en ce qu'**il comprend la validation (24) préalable des règles de configuration générées auprès d'un administrateur du premier réseau de communication, avant leur transmission à l'équipement pare-feu.

7. Procédé de configuration d'un équipement pare-feu selon l'une quelconque des revendications précédentes, **caractérisé en ce qu'**il met en œuvre un stockage (26) en mémoire des informations caractéristiques obtenues pour l'équipement utilisateur, en tant qu'informations caractéristiques de référence (ICR).

8. Procédé de configuration d'un équipement pare-feu selon l'une quelconque des revendications **3 à 7, caractérisé en ce qu'**il met en œuvre une comparaison (22) des informations caractéristiques courantes avec les informations caractéristiques de référence, et **en ce que** la génération (23) de règles de configuration est déclenchée sur détection d'une différence entre les informations caractéristiques courantes et les informations caractéristiques de référence.

9. Procédé de configuration d'un équipement pare-feu selon la revendication **8, caractérisé en ce que,** lorsque la différence concerne des informations caractéristiques représentatives d'une activation d'une nouvelle interface, au moins une règle de configuration supplémentaire relative à ladite nouvelle interface active est générée et **en ce que** le message de commande de mise à jour comprend ladite au moins une règle supplémentaire.

10. Procédé de configuration d'un équipement pare-feu selon la revendication **8, caractérisé en ce que,** lorsque la différence concerne des informations caractéristiques représentatives d'une désactivation d'une interface, le message de commande de mise à jour comprend une commande de suppression de la au moins une règle de configuration relative à l'interface désactivée.

11. Procédé de mise à jour d'une configuration d'un équipement pare-feu dans un premier réseau de communication géré par un équipement d'accès à un deuxième réseau de communication, **caractérisé en ce qu'**il comprend, mises en œuvre par l'équipement pare-feu :
- la réception d'un message de commande de mise à jour d'une configuration, comprenant des règles de configuration associées à un équipement utilisateur présent dans le premier réseau de communication; et
- la mise à jour de la configuration de l'équipement pare-feu selon la commande reçue.

12. Dispositif (100) de configuration d'un équipement pare-feu dans un premier réseau de communication géré par un équipement d'accès à un deuxième réseau de communication, **caractérisé en ce qu'**il est configuré pour :
- obtenir des informations caractéristiques d'un équipement utilisateur connecté au premier réseau par analyse d'interfaces actives de cet équipement utilisateur dans le premier réseau de communication; et
- générer au moins une règle de configuration de l'équipement pare-feu en fonction des caractéristiques obtenues et d'un modèle de configuration prédéterminé ; et
- transmettre à l'équipement pare-feu un message de commande de mise à jour d'une configuration , comprenant ladite au moins une règle de configuration déterminée.

13. Equipement pare-feu (FW) dans un premier réseau de communication géré par un équipement d'accès à un deuxième réseau de communication, **caractérisé en ce qu'**il est configuré pour :
- recevoir un message de commande de mise à jour d'une configuration, comprenant au moins une règle de configuration associées à un équipement utilisateur présent dans le premier réseau de communication ; et
- mettre à jour la configuration de l'équipement pare-feu selon les règles de configuration reçues.

14. Equipement d'accès (AP) à un réseau de communication étendu, configuré pour gérer un premier réseau de communication (LAN), **caractérisé en ce qu'**il comprend un dispositif (100) de configuration d'un équipement pare-feu du premier réseau de communication (LAN) selon la revendication **12.**

15. Equipement d'accès selon la revendication **14, caractérisé en ce qu'**il comprend un équipement pare-feu (FW) selon la revendication **13.**

16. Produit programme d'ordinateur comprenant des instructions de code de programme pour la mise en œuvre d'un procédé selon l'une quelconque des revendications **1 à 11,** lorsqu'il est exécuté par un processeur.
